# DEMANDE DE BREVET EUROPEEN

(11) **EP 1 048 559 A1**
(43) Date de publication de la demande: **02.11.2000**
(21) Numéro de dépôt: 00420084.6
(22) Date de dépôt: 27.04.2000
(51) Int. Cl.: B62K 9/00, B62K 13/00, B62J 9/00, B62H 7/00

(54) **Jouet à roues pour enfant**

(30) Priorité: 28.04.1999 FR 9905576
(71) Demandeur: Etablissements Maurice Charton, 39150 Saint Laurent en Grandvaux (FR)
(72) Inventeur: Pauly, Gilbert, 39130 Blye (FR)
(74) Mandataire: Myon, Gérard Jean-Pierre

(57) **Abrégé**

Ce jouet, qui est notamment un tricycle (2), un tracteur ou un porteur, comprend un cadre supportant un siège (31) et reposant sur au moins trois roues, dont au moins une roue avant (10) et au moins une roue arrière (26), et comporte un organe (8) permettant son guidage par un adulte.

Cet organe de guidage (8) comprend des moyens de support (42, 54) d'un contenant, notamment d'un sac à dos (36), distincts des moyens de préhension (64) de l'organe de guidage. Ce dernier assume donc une double fonction de guidage et de support.

## Description

La présente invention concerne un jouet à roues pour enfants, tel qu'un tricycle, un tracteur ou bien encore un porteur.

De manière habituelle, ce type de jouet est formé par un cadre qui repose sur des roues, dont au moins une roue directrice à l'avant, et supporte en outre un siège destiné à recevoir un enfant. Un système de direction, actionné par exemple par un guidon, permet d'orienter la roue avant et, ce faisant, de déterminer la trajectoire du jouet.

L'invention concerne plus particulièrement un tel jouet, qui est muni d'un organe permettant son guidage par un adulte, notamment lorsque l'enfant est fatigué. Dans cette configuration, le jouet assume donc une fonction de poussette.

De manière connue, cet organe de guidage est constitué par une canne fixée sur l'extrémité arrière du cadre du jouet. Une telle solution présente cependant certains inconvénients, en ce sens que cette canne, tout en induisant un encombrement relativement important, remplit uniquement cette fonction de guidage.

Afin de pallier ces différents inconvénients, l'invention se propose de réaliser un jouet pour enfant, pourvu d'un organe qui, tout en assurant un guidage satisfaisant, assume une fonction supplémentaire.

A cet effet, elle a pour objet un jouet pour enfant, notamment tricycle, tracteur ou porteur, comprenant un cadre supportant un siège et reposant sur au moins trois roues, dont au moins une roue avant et au moins une roue arrière, ledit jouet comportant un organe permettant son guidage par un adulte, caractérisé en ce que ledit organe de guidage comprend des moyens de support d'un contenant, notamment d'un sac à dos, distincts des moyens de préhension de l'organe de guidage.

Selon d'autres caractéristiques de l'invention :
- les moyens de préhension sont fixés de manière amovible et/ou télescopique, par rapport à une portion fixe de l'organe de guidage, adjacente au cadre du jouet,
- les moyens de support sont portés par ladite portion fixe,
- les moyens de support comprennent une traverse dudit organe de guidage, adaptée pour recevoir, de façon amovible, des premiers éléments de fixation dudit contenant, notamment des sangles,
- les moyens de support comportent en outre deux longerons sensiblement parallèles, s'étendant à partir d'extrémités opposées de ladite traverse, lesdits longerons étant adaptés pour recevoir, de manière amovible, des seconds éléments de fixation du contenant,
- l'organe de guidage comprend des moyens de fixation amovible au cadre, notamment au moins un étrier propre à chevaucher une partie tubulaire correspondante du cadre, et des organes de fixation amovible du ou de chaque étrier sur ladite partie tubulaire, notamment au moins une vis traversant le ou chaque étrier et ladite partie tubulaire, coopérant avec au moins un écrou,
- le jouet comprend une première et/ou une seconde parties avant pourvues de ladite roue avant et une partie arrière pourvue de ladite roue arrière et dudit organe de guidage, la ou chaque partie avant étant séparable de la partie arrière,
- une première partie avant est pourvue d'une roue directrice, de moyens de commande de ladite roue directrice et, éventuellement, de pédales,
- une seconde partie avant est pourvue de moyens de réception des pieds d'un enfant, la roue avant étant montée folle autour de l'axe de son moyeu et autour d'un axe sensiblement vertical et étant dépourvue de moyens de commande actionnables pour un enfant assis sur le siège,
- le jouet est pourvu d'un contenant fixé, notamment de façon amovible, sur les moyens de support de l'organe de guidage.

L'invention va être décrite ci-dessous, en référence aux dessins annexés, donnés uniquement à titre d'exemples non limitatifs et dans lesquels :
- la figure 1 est une vue en perspective éclatée des différents éléments constitutifs d'un jouet pour enfant conforme à l'invention ;
- la figure 2 est une vue du jouet pour enfant de la figure 1, à plus grande échelle une fois assemblé ;
- la figure 3 est une vue en coupe partielle, à plus grande échelle, illustrant la fixation amovible d'un organe de guidage sur le cadre du jouet pour enfant des figures 1 et 2 et
- la figure 4 est une vue de côté, illustrant l'organe de guidage démonté par rapport au cadre du jouet des figures précédentes.

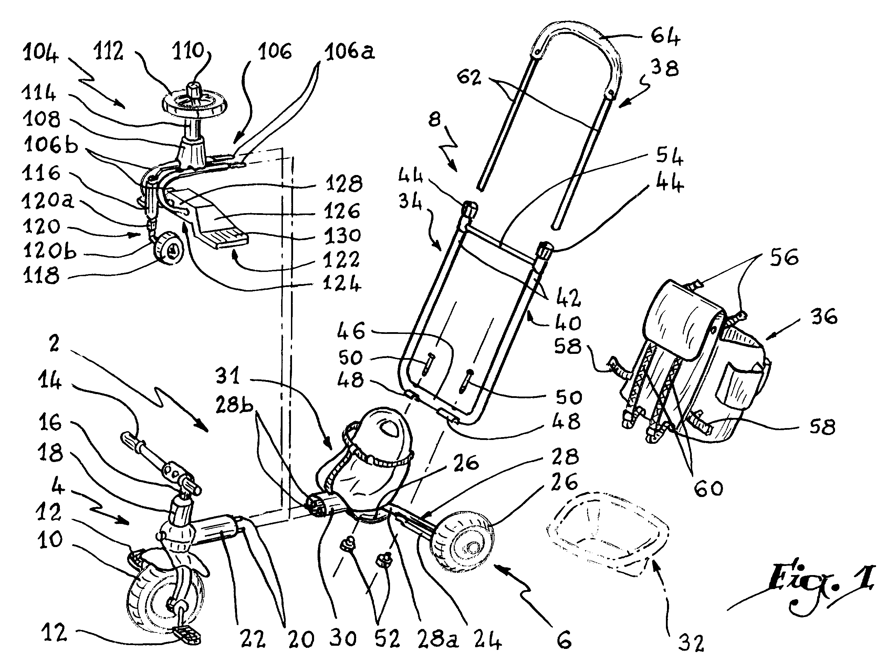

Le jouet représenté à la figure 1 et désigné dans son ensemble par la référence 2 est un tricycle, mais l'invention s'applique également à d'autres types de jouets, comme notamment un tracteur ou un porteur.

Dans ce qui suit, et pour plus de clarté, les différents éléments de ce tricycle seront dénommés respectivement avant, arrière, supérieur et inférieur, en faisant référence à un tricycle monté et utilisé de manière classique.

Le tricycle 2 comprend une partie avant 4, une partie arrière 6 et un organe de guidage 8, ces trois éléments étant amovibles les uns par rapport aux autres.

La partie avant 4 comporte, de façon classique, une roue avant 10 actionnable par des pédales 12. Un guidon 14 permet de faire pivoter la roue avant 10 autour d'un axe sensiblement vertical. A cet effet, ce guidon 14 est solidaire d'une tige de direction 16 traversant un fût 18. Ce dernier est solidaire de l'ensemble du cadre du tricycle.

Deux tubes avant 20 s'étendent à partir du fût 18, en direction de la partie arrière 6. Ces tubes 20, qui sont parallèles entre eux, sont entourés par une enveloppe 22, ouverte à son extrémité opposée au fût 18. Ces tubes 20 sont adaptés pour assurer une fixation amovible des parties avant 4 et arrière 6, comme cela sera décrit plus en détail dans ce qui suit.

La partie arrière 6 comprend un essieu 24 sur lequel sont montées deux roues arrière 26. Deux tubes 28 s'étendent à partir de chaque extrémité de l'essieu 24 et comportent un tronçon arrière 28a prolongé par un tronçon avant 28b. Les tronçons arrière 28a de chacun des tubes sont convergents l'un vers l'autre vers l'avant, à l'opposé de l'essieu 24, alors que les tronçons avant 28b sont sensiblement parallèles et dirigés vers l'avant. Ces derniers sont entourés, sur une majeure partie de leur longueur, par un carter 30, ouvert à son extrémité avant. La partie arrière 6 comprend un siège 31 et peut recevoir en outre, de manière connue en soi, une benne 32.

On va maintenant décrire la fixation mutuelle amovible des parties avant et arrière 4 et 6 du tricycle tel que décrit ci-dessus. Une lame élastique, non représentée, analogue à celle décrite dans FR-A-2 703 972, est disposée à l'intérieur de chaque extrémité libre des tubes avant 20. Chacune de ces lames est pourvue d'un pion, également non représenté, faisant saillie vers l'extérieur au travers de perforations ménagées dans ces extrémités libres.

De plus, les extrémités libres des tronçons avant 28b des tubes 28 de la partie arrière 6 sont munies de perforations analogues, destinées au passage des pions. Pour assujettir mutuellement les parties avant et arrière, il suffit donc d'engager chaque extrémité libre des tubes avant 20 à l'intérieur des extrémités libres des tubes arrière 28, jusqu'à ce que les pions pénètrent élastiquement dans l'une des perforations dont sont munis les tronçons 28b. Lors de cet engagement mutuel, l'enveloppe 22 de la partie avant 4 coulisse à l'intérieur du carter 30, de plus grandes dimensions transversales, dont est pourvue la partie arrière 6.

Au gré des besoins de l'utilisateur, la partie avant 4, munie notamment du guidon 14, peut être remplacée par une seconde partie avant 104. Cette dernière comporte deux tubes parallèles 106 formés d'une portion arrière 106a sensiblement rectiligne et horizontale et d'une portion avant 106b recourbée vers le bas et vers l'arrière, de manière à présenter une forme en C. La portion arrière 106a présente une conformation analogue à celle des tubes 20, de manière à permettre la fixation amovible de la partie avant 104 sur la partie arrière 6.

Une console 108, fixée sur la portion 106a, sert de support à un avertisseur sonore 110. On peut également prévoir que cette console reçoive d'autres fonctions de jeu ou d'éveil, telles que notamment un volant 112 monté fou sur un axe 114, ou bien encore un porte-biberon.

Un fût 116 cylindrique s'étendant de manière sensiblement verticale, est soudé entre les deux portions avant 106b des tubes 106, au niveau de l'âme du C.

Une roue avant 118 est assujettie à ce fût 116, en étant libre de pivoter autour de l'axe vertical de ce dernier. Cette roue 118 est montée sur un bras 120 coudé en forme L comprenant une tige verticale 120a et une tige horizontale 120b. La roue 118, sans pédale, est montée folle sur la tige horizontale 120b, alors que la tige verticale 120a est libre de pivoter autour de l'axe du fût, tout en étant solidaire axialement de ce dernier. La roue 118 est donc dépourvue de moyens de commande par l'enfant assis sur le siège. On peut également prévoir que le bras solidaire du fût 116 présente une forme de T et possède donc deux tiges horizontales autour desquelles deux roues folles sont libres de pivoter.

Des moyens de réception des pieds d'un enfant, désigné dans l'ensemble par la référence 122, sont fixés sur l'extrémité de la portion avant 106b des tubes 106. Ces moyens de réception comportent un profilé 124 en forme de U dont les ailes 126 font saillie vers le bas et dont l'âme 128 est pourvue d'orifices non représentés dans lesquels pénètre l'extrémité libre des portions avant 106b. Deux repose-pieds 130 s'étendent vers l'extérieur à partir de l'extrémité de chaque aile 126, opposée à l'âme 128.

L'organe de guidage, désigné dans son ensemble par la référence 8, comprend une portion inférieure 34, destinée à la fixation amovible d'un sac à dos 36, ainsi qu'une portion supérieure 38 de préhension par un utilisateur adulte.

La portion inférieure 34 comprend un corps tubulaire 40 en forme de U, dont les ailes 42 sont pourvues, à leur extrémité libre, de fentes non représentées, à la périphérie desquelles sont disposés des boutons moletés 44. Ces derniers permettent la fixation télescopique de la portion supérieure 38 par rapport à la portion inférieure 34.

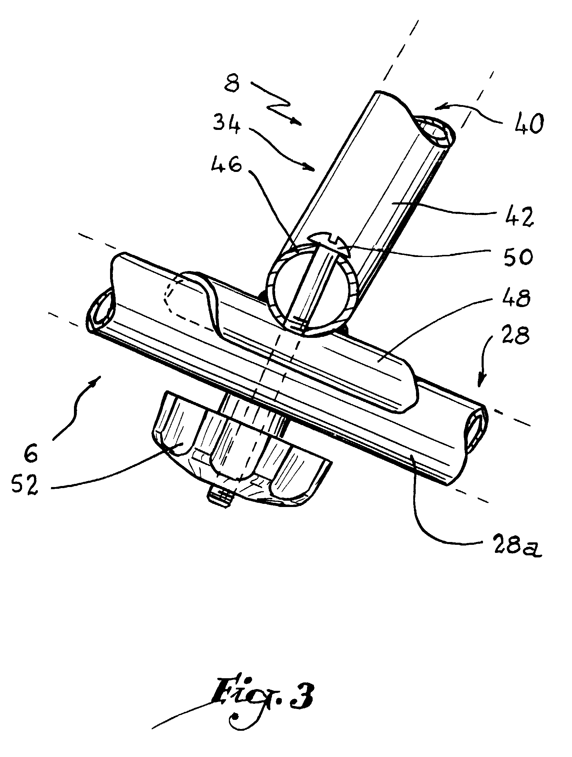

L'âme 46 horizontale de la portion inférieure 34 est munie de deux étriers 48 sensiblement en forme de C. Les dimensions latérales et l'inclinaison de ces étriers 48 sont telles qu'elles permettent à ces derniers de reposer contre la face supérieure des tronçons arrière 28a convergents l'un vers l'autre, comme cela ressort plus précisément de la figure 3. Comme le montre également cette dernière, la fixation des étriers 48 sur ces tronçons 28a est assurée en faisant passer des moyens de fixation, tels que des vis 50, au travers d'orifices ménagés respectivement dans l'âme tubulaire 46, dans chacun des étriers 48 et dans chacun des tronçons arrière 28a. Ces vis 50 sont immobilisées au moyen d'écrous moletés 52.

Une traverse horizontale 54 relie l'extrémité supérieure des ailes 42. Cette traverse permet l'accrochage de sangles supérieures 56 dont est muni le sac à dos 36. La fixation de ce dernier sur la portion inférieure 34 est complétée en entourant chaque aile 42 au moyen d'une sangle latérale 58 correspondante dont est équipé le sac 36. Il est à noter que, lorsque ce dernier est assujetti sur la portion de réception 34, des lanières 60 du sac sont accessibles à un utilisateur, comme cela sera décrit plus en détail dans ce qui suit.

La portion supérieure 38 de l'organe de guidage, qui est tubulaire, présente une forme de U inversé. Ses ailes 62 possèdent un diamètre inférieur aux ailes 42 de la portion inférieure 34, de sorte que cette portion supérieure 38 peut être fixée de façon télescopique sur cette portion inférieure 34.

L'âme 64 de cette portion supérieure 38 est recouverte, par exemple par un gainage, de manière à en rendre aisée la préhension par un utilisateur.

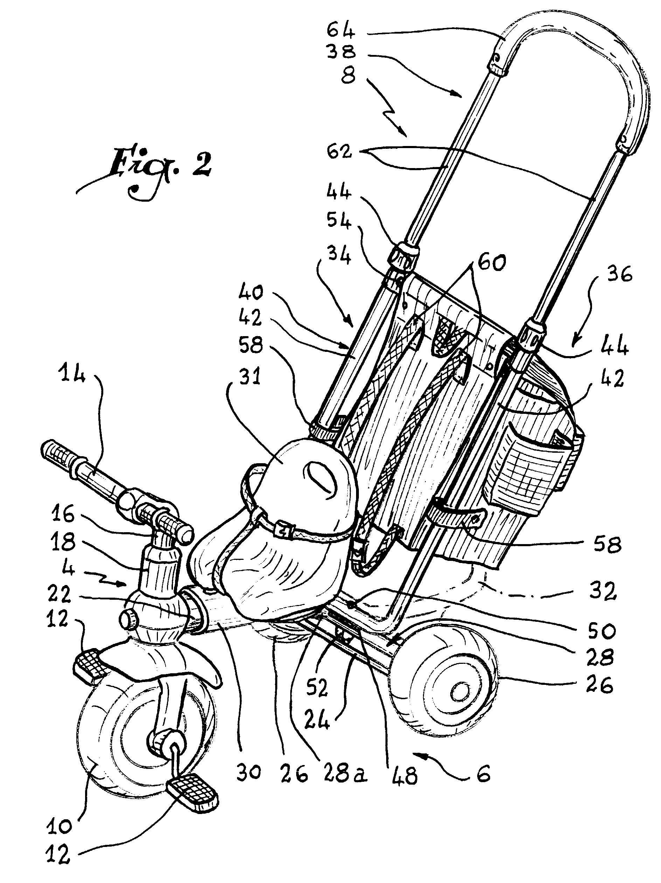

La figure 2 représente le tricycle 2 dans sa fonction supplémentaire de poussette. L'organe de guidage 8 est fixé sur le cadre du tricycle, de sorte qu'un adulte permet le guidage de celui-ci. On peut également prévoir que, dans cette utilisation en tant que poussette, la partie avant 4 soit remplacée par celle 104 pourvue d'une roue avant 118 folle.

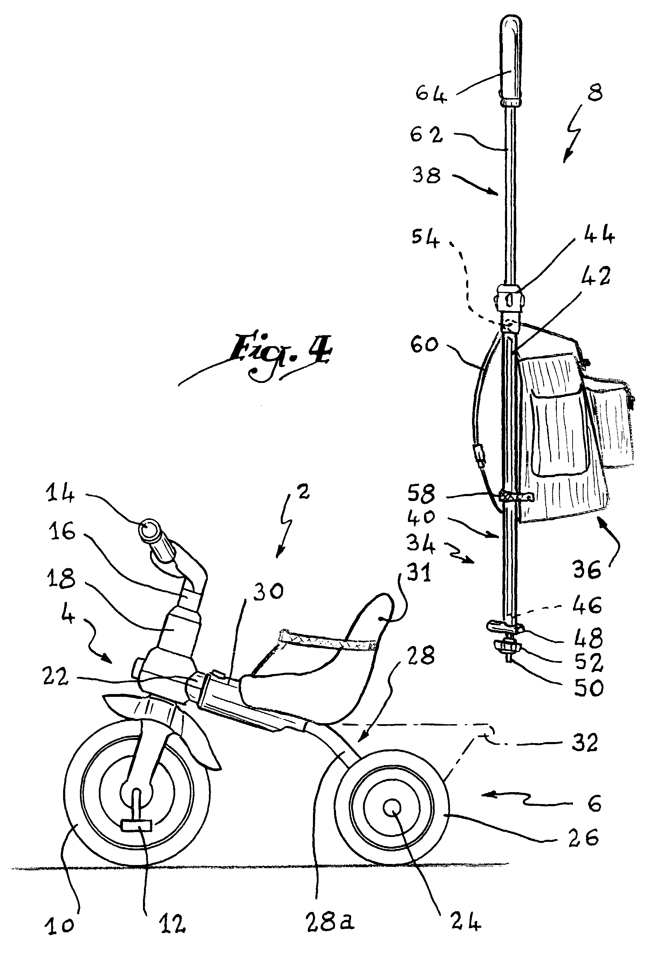

La figure 4 représente le tricycle, lorsque ce dernier est actionné par l'enfant lui-même. Dans cette configuration, il est possible de retirer les vis 50 et les écrous moletés 52, de manière à désolidariser l'organe de guidage 8, supportant éventuellement le sac à dos 36, par rapport au cadre du tricycle 2. Etant donné que les lanières 60 du sac sont accessibles à un utilisateur, ce dernier peut mettre ce sac sur son dos, sans avoir à l'ôter de l'organe de guidage 8. De plus, ce dernier est léger et peu encombrant, surtout en position basse, escamotée, de la portion supérieure 38, de sorte qu'il n'occasionne qu'une faible gêne à l'utilisateur.

L'invention permet de réaliser les objectifs précédemment mentionnés.

En effet, l'organe de guidage du jouet pour enfant conforme à l'invention assume, outre sa fonction classique de guidage, une fonction supplémentaire de support d'un sac à dos ou analogue. Ceci assure à un adulte poussant le jouet une facilité de mouvement accrue.

Prévoir un organe de guidage et de support, amovible par rapport au cadre du tricycle, est également avantageux. Cet agencement permet un rangement plus simple et induit en outre un encombrement plus faible, lorsque le jouet est actionné par l'enfant, cet organe de guidage étant alors désolidarisé du cadre. Ceci limite les risques d'accrochage du jouet, par exemple avec des personnes ou des objets.

Prévoir une portion de support adjacente au cadre et prolongée par une portion de préhension permet de disposer près du sol le poids de l'objet reçu par l'organe de guidage. Ceci évite donc, dans une large mesure, tout risque de basculement du jouet.

Le fait de réaliser le jouet en deux parties avant et arrière séparables est également avantageux. Ceci assure tout d'abord un rangement commode du jouet, en particulier dans un espace réduit. De plus, dans le cas où ce jouet est pourvu de deux parties avant distinctes, il est possible d'équiper la partie arrière avec l'une ou l'autre. De la sorte, au fur et à mesure de la croissance de l'enfant, il est envisageable de remplacer la partie avant pourvue de repose-pieds par celle munie d'un guidon, ce qui permet de disposer de deux jouets différents, tout en n'en modifiant pas la partie arrière. Dans le cas d'une famille nombreuse, cet agencement permet d'interchanger à volonté les différentes parties avant, en fonction de l'âge de l'enfant utilisant le jouet.

## Revendications

1. Jouet pour enfant, notamment tricycle (2), tracteur ou porteur, comprenant un cadre (20, 28 ; 20, 106) supportant un siège (31) et reposant sur au moins trois roues, dont au moins une roue avant (10 ; 118) et au moins une roue arrière (26), ledit jouet comportant un organe (8) permettant son guidage par un adulte, caractérisé en ce que ledit organe de guidage (8) comprend des moyens de support (42, 54) d'un contenant, notamment d'un sac à dos (36), distincts des moyens de préhension (64) de l'organe de guidage.

2. Jouet suivant la revendication 1, caractérisé en ce que lesdits moyens de préhension (64) sont fixés de manière amovible et/ou télescopique, par rapport à une portion fixe (34) de l'organe de guidage (8), adjacente au cadre (20) du jouet.

3. Jouet suivant la revendication 1 ou 2, caractérisé en ce que lesdits moyens de support (42, 54) sont portés par ladite portion fixe (34).

4. Jouet suivant l'une des revendications 1 à 3, caractérisé en ce que lesdits moyens de support comprennent une traverse (54) dudit organe de guidage (8), adaptée pour recevoir, de façon amovible, des premiers éléments de fixation dudit contenant, notamment des sangles (56).

5. Jouet suivant la revendication 4, caractérisé en ce que lesdits moyens de support comportent en outre deux longerons (42) sensiblement parallèles, s'étendant à partir d'extrémités opposées de ladite traverse (54), lesdits longerons étant adaptés pour recevoir, de manière amovible, des seconds éléments (58) de fixation du contenant (36).

6. Jouet suivant l'une quelconque des revendications 1 à 5, caractérisé en ce que ledit organe de guidage (8) comprend des moyens (48, 50, 52) de fixation amovible au cadre (20), notamment au moins un étrier (48) propre à chevaucher une partie tubulaire (28a) correspondante du cadre (20), et des organes de fixation amovible du ou de chaque étrier sur ladite partie tubulaire, notamment au moins une vis (50) traversant le ou chaque étrier et ladite partie tubulaire, coopérant avec au moins un écrou (52).

7. Jouet suivant l'une des revendications 1 à 6, caractérisé en ce qu'il comprend une première (4) et/ou une seconde (104) parties avant pourvues de ladite roue avant (10 ; 118) et une partie arrière (6) pourvue de ladite roue arrière (26) et dudit organe de guidage (8), la ou chaque partie avant (4 ; 104) étant séparable de la partie arrière (6).

8. Jouet suivant la revendication 7, caractérisé en ce qu'une première partie avant (4) est pourvue d'une roue directrice (10), de moyens de commande (14) de ladite roue directrice et, éventuellement, de pédales (12).

9. Jouet suivant l'une des revendications 7 ou 8, caractérisé en ce qu'une seconde partie avant (104) est pourvue de moyens de réception (122) des pieds d'un enfant, la roue avant (118) étant montée folle autour de l'axe de son moyeu et autour d'un axe sensiblement vertical et étant dépourvue de moyens de commande actionnables pour un enfant assis sur le siège (31).

10. Jouet suivant l'une quelconque des revendications précédentes, caractérisé en ce qu'il est pourvu d'un contenant (36) fixé, notamment de façon amovible, sur les moyens de support (42, 54) de l'organe de guidage (8).
